# EUROPÄISCHE PATENTSCHRIFT

(11) **EP 3 304 827 B1**
(45) Veröffentlichungstag und Bekanntmachung des Hinweises auf die Patenterteilung: **25.08.2021**
(21) Anmeldenummer: 16727187.3
(22) Anmeldetag: 03.06.2016
(51) Int. Cl.: H04L 12/437

(54) **VERFAHREN ZUM BETREIBEN EINES NETZWERKES MIT EINEM MULTI-MASTER-REDUNDANZ-PROTOKOLL UND EINER ZUSÄTZLICHEN REDUNDANZFUNKTION MITTELS ÜBERBRÜCKUNGSSCHALTER**
METHOD FOR OPERATING A NETWORK WITH A MULTI-MASTER REDUNDANCY PROTOCOL AND ADDITIONAL REDUNDANCY FUNCTION BY MEANS OF A BYPASS SWITCH
PROCÉDÉ POUR FAIRE FONCTIONNER UN RÉSEAU PRÉSENTANT UN PROTOCOLE DE REDONDANCE MULTI-MAÎTRE ET UNE FONCTION DE REDONDANCE SUPPLÉMENTAIRE AU MOYEN D'UN COMMUTATEUR DE PONTAGE

(30) Priorität: 03.06.2015 DE 102015210304
(43) Veröffentlichungstag der Anmeldung: 11.04.2018
(73) Patentinhaber: Hirschmann Automation and Control GmbH, 72654 Neckartenzlingen (DE)
(72) Erfinder:
(74) Vertreter: Greif, Thomas
(86) Internationale Anmeldenummer: PCT/EP2016/062685
(87) Internationale Veröffentlichungsnummer: WO 2016/193450

(56) Entgegenhaltungen:
- EP-A1- 2 309 678
- WO-A1-2006/108881
- WO-A1-2013/034188
- US-B1- 6 680 903

## Beschreibung

Die Erfindung betrifft ein Verfahren zum Betreiben eines Netzwerkes nach einem Multi-Master-Redundanz-Protokoll mit einer zusätzlichen Redundanzfunktion, wobei in dem Netzwerk mehrere Netzwerkgeräte in einer Ringtopologie über Leitungen miteinander verbunden sind und Daten austauschen, gemäß den Merkmalen des Oberbegriffes des Patentanspruches 1. Eine bevorzugte Ausführungsform wird in Anspruch 2 definiert.

US 6 680 903 B1 offenbart ein Verfahren für die automatische Auswahl eines alternativen Mastergeräts beim Ausfall eines aktiven Mastergeräts.

Netzwerke, bei denen mehrere Netzwerkgeräte in einer Ringtopologie über Leitungen miteinander verbunden sind und Daten austauschen, sind grundsätzlich bekannt. Da es zu Störungen in dem Netzwerk während dessen Betrieb kommen kann (zum Beispiel Ausfall eines Netzwerkgerätes, Unterbrechung einer Leitung oder dergleichen) sind schon verschiedene Redundanzfunktionen bekannt geworden. Besonders bevorzugte Redundanzverfahren sind Multi-Master-Redundanz-Protokolle, welche vorzugsweise in der Automatisierungstechnik angewandt werden und grundsätzlich bekannt sind. Durch die Anwendung dieser bekannten Redundanzverfahren wird die Ausfallzeit beim Umschalten von einem Netzwerkgerät, das bisher der Master war, auf ein anderes Netzwerkgerät, das der neue Master wird, verkürzt. Allerdings gibt es bei Anwendungen von Netzwerken erhöhte Redundanz-Anforderungen, sodass die Reaktionszeiten und die Ausfallsicherheit für den Fall, dass ein Netzwerkgerät als Master ausfällt, noch nicht ausreichend sind.

Der Erfindung liegt daher die Aufgabe zugrunde, ein Verfahren zum Betreiben eines Netzwerkes hinsichtlich der Reaktionszeiten und der Ausfallsicherheit in einem Störungsfall weiter zu verbessern.

Diese Aufgabe ist durch die Merkmale des Patentanspruches 1 gelöst.

Erfindungsgemäß ist vorgesehen, dass für den Fall, dass eines der Netzwerkgeräte, welches bisher als Master für die Redundanzfunktion konfiguriert war, ausfällt, zwei Ports des ausgefallenen Netzwerkgerätes mittels eines Überbrückungsschalters auf der physikalischen Ebene verbunden werden. Dies hat den Vorteil, dass dadurch die Leitungen, die an den jeweiligen Ports angeschlossen sind, durchgeschaltet werden, sodass trotz Ausfall des Netzwerkgerätes (bisheriger Master) die Ringtopologie erhalten bleibt und ausreichend Zeit zur Verfügung steht, um mittels der Multi-Master Redundanzfunktion, das heißt, mittels eines geeigneten Redundanzprotokolls, ein anders Netzwerkgerät, das bisher kein Master war, als Master einzusetzen. Ist dies erfolgt, wird die Verbindung der beiden Ports des ausgefallenen Netzwerkgerätes aufgehoben, sodass dadurch in vorteilhafter Weise vermieden wird, dass sich eine geschlossene Schleife in dem Netzwerk bilden kann bzw. die durch die Verbindung der beiden Ports geschlossene Verbindung und die daraus entstehende Schleife aufgehoben wird, um ein permanentes Kreisen von Daten in dem Netzwerk zu vermeiden.

Das erfindungsgemäße Verfahren zum Betreiben eines Netzwerkes nach einem Multi-Master-Redundanz-Protokoll, insbesondere einem Device-Level-Ring-Protokoll (DLR) wird im Folgenden erläutert und anhand der Figuren beschrieben.

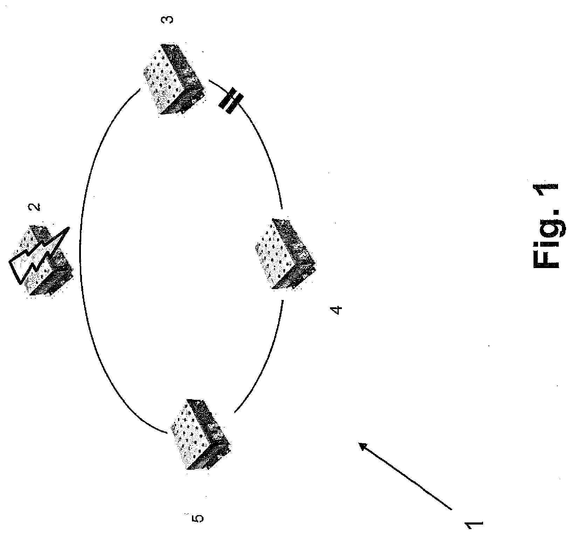

Figur 1 zeigt, soweit im Einzelnen dargestellt, ein Netzwerk 1 in einer Ringtopologie, in welchem mehrere Netzwerkgeräte 2 bis 5 gleicher oder unterschiedlicher Bauart angeordnet sind. Bei den Netzwerkgeräten 2 bis 5 handelt es sich beispielsweise um Switche, Router oder dergleichen.

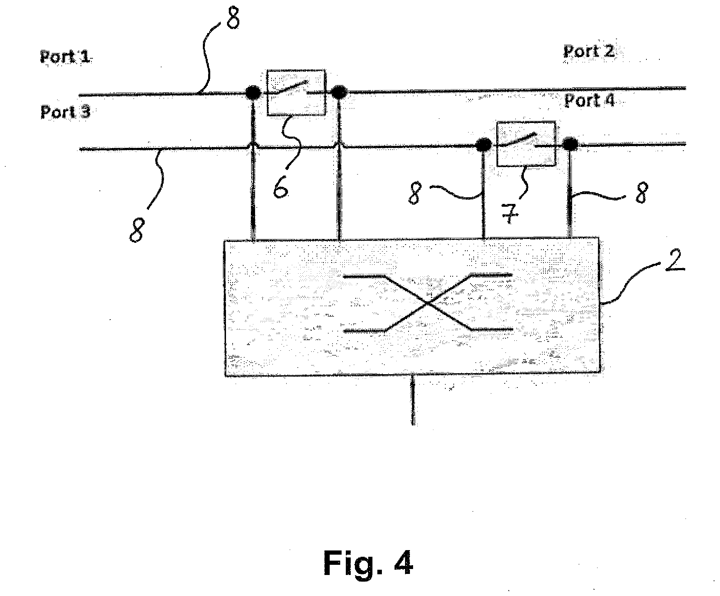

Ausgangsbasis ist ein Netzwerk 1 in einer Ringtopologie, in welchem die Netzwerkgeräte 2 bis 5 (auch weniger oder mehr als vier Netzwerkgeräte wie in diesem Ausführungsbeispiel) über Leitungen miteinander verbunden und Daten austauschen. Während in Figur 1 schon dargestellt ist, dass das Netzwerkgerät 2 als bisheriger Master für die Multi-Master-Redundanz ausgefallen und der Überbrückungsschalter (siehe Figur 4) geschlossen ist, ist in diesem Ausführungsbeispiel normalerweise das Netzwerkgerät 2 zunächst der Master für die Redundanzfunktion und die übrigen Netzwerkgeräte 3 bis 5 sind kein Master oder aber Backup-Master im Sinne des Multi-Master-Redundanz-Protokolls. In Figur 1 ist nun dargestellt, dass der bisherige alte aktive Master, nämlich das Netzwerkgerät 2, ausgefallen ist und es somit nicht mehr geeignet ist, seine Funktion in dem Netzwerk 1 auszuüben. Daher ist es als ausgefallen und aus dem Netzwerk 1 herausgenommen dargestellt. Für diesen Fall wurde nach dem Multi-Master-Redundanz-Protokoll ein weiteres Netzwerkgerät, hier das Netzwerkgerät 3, als neuer aktiver Master eingesetzt, während die beiden anderen Netzwerkgeräte 4, 5 als Backup-Master verwendet werden. Durch den geschlossenen Überbrückungsschalter im Netzwerkgerät 2 bleibt die Multi-Master-Redundanz weiterhin redundanzfähig und kann Ausfälle weiterer Master kompensieren.

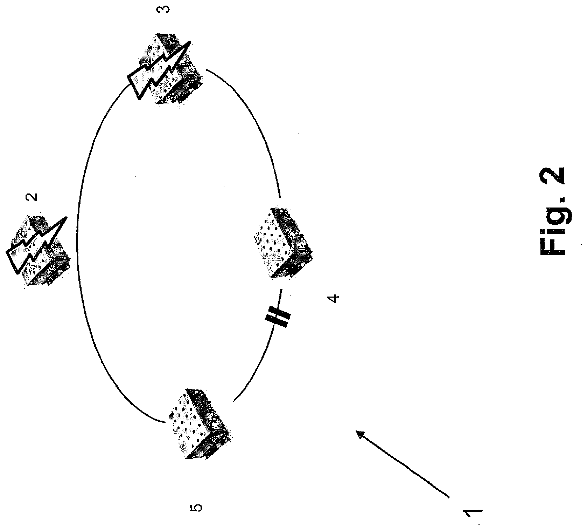

Figur 2 zeigt, ausgehend von der Konstellation gemäß Figur 1, dass der neue Master, nämlich das Netzwerkgerät 3, ausfällt und das bisherige Netzwerkgerät 4 als neuer aktiver Master ausgewählt und eingesetzt wird. In diesem Fall kann, muss aber nicht, das übrige Netzwerkgerät 5 als Backup-Master fungieren. Durch den geschlossenen Überbrückungsschalter im Netzwerkgerät 3 bleibt die Multi-Master Redundanz weiterhin redundanzfähig und kann Ausfälle weiterer Master kompensieren.

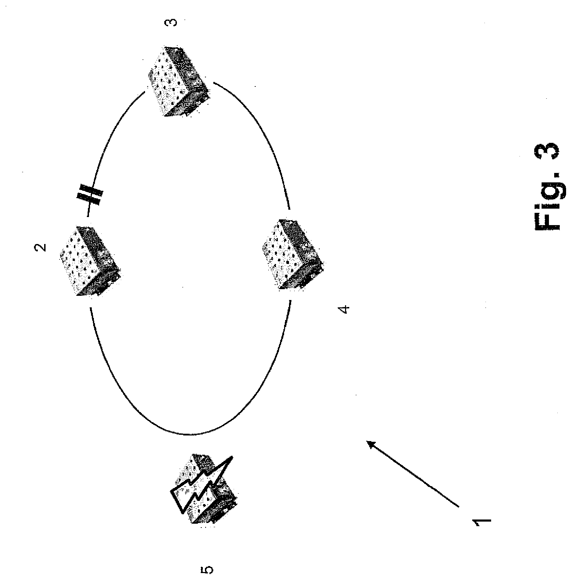

In Figur 3 ist die Situation dargestellt, dass einer der Backup-Master, hier das Netzwerkgerät 5, ausfällt und das gemäß Figur 1 ausgefallene Netzwerkgerät 2 schon durch ein neues Gerät ersetzt wurde, welches jetzt der aktive Master ist. Durch den geschlossenen Überbrückungsschalter im Netzwerkgerät 5 bleibt die Multi-Master-Redundanz weiterhin redundanzfähig und kann Ausfälle weiterer Master kompensieren.

In Figur 4 ist dargestellt, dass ein Netzwerkgerät (hier das Netzwerkgerät 2) vier Ports (Port 1, Port 2, Port 3, Port 4) aufweist, über welches dieses Netzwerkgerät 2 in dem Netzwerk 1 eingesetzt ist.

Zur Realisierung der Funktionen, die in den Figuren 1 bis 3 dargestellt und vorstehend beschrieben sind, ist erfindungsgemäß jeweils ein Überbrückungsschalter 6 zur Überbrückung von Port 1 und Port 2 sowie ein weiterer Überbrückungsschalter 7 zur Überbrückung von Port 3 und Port 4 des Netzwerkgerätes 2 vorhanden (auch weniger oder mehr als zwei Überbrückungsschalter wie in diesem Ausführungsbeispiel). Sollte also, wie im Zusammenhang mit den Figuren 1 bis 3 beschrieben, eines der Netzwerkgeräte (bei denen es sich nicht immer zwangsweise um das Netzwerkgerät 2 handeln muss) ausfallen, werden unmittelbar die Überbrückungsschalter 6, 7 betätigt, um die angeschlossenen Ports quasi kurzzuschließen. Damit wird wirksam und in vorteilhafter Weise vermieden, dass der Datenring unterbrochen wird, solange ein neues Netzwerkgerät als Master aktiviert worden ist. Dadurch lässt sich in vorteilhafter Weise die Überbrückungszeit, bis ein anders Netzwerkgerät als Master aktiviert worden ist, deutlich senken und die Redundanzfunktion für die übrigen Teilnehmer erhalten. Dabei wird zwar für eine kurze Zeit in Kauf genommen, dass der Datenring des Netzwerkes 1 komplett geschlossen ist und Datenpakete möglicherweise in einer Endlosschleife kreisen könnten. Da dies jedoch nur sehr kurzzeitig möglich ist, bis nämlich die beiden Überbrückungsschalter 6, 7 wieder geöffnet werden, kann dies im Sinne der Realisierung einer äußerst kurzem Umschaltzeit von dem alten aktiven, aber ausgefallenen Master hin zu dem Einsatz des neuen Masters in Kauf genommen werden.

Die Überbrückungsschalter 6, 7 schließen die jeweilige Leitung 8 kurz, sobald der Strom ausfällt und sie öffnen wieder, wenn das ausgefallene Netzwerkgerät vollständig gebootet ist. Im Normalbetrieb sind die Überbrückungsschalter 6, 7 geöffnet.

### Bezugszeichenliste

- 1.: Netzwerk
- 2.: Netzwerkgerät
- 3.: Netzwerkgerät
- 4.: Netzwerkgerät
- 5.: Netzwerkgerät
- 6.: Überbrückungsschalter
- 7.: Überbrückungsschalter
- 8.: Leitungen

## Patentansprüche

1. Verfahren zum Betreiben eines Netzwerkes (1) nach einem Multi-Master-Redundanz-Verfahren mit einer Redundanzfunktion, wobei in dem Netzwerk (1) mehrere Netzwerkgeräte (2 bis 5) in einer Ringtopologie über Leitungen (8) miteinander verbunden sind und Daten austauschen, wobei für den Fall, dass eines der Netzwerkgeräte (2 bis 5) ausfällt, zwei Ports des ausgefallenen Netzwerkgerätes (2 bis 5), die einer der Leitungen zugehörig sind, mittels eines Überbrückungsschalters (6, 7) auf der physikalischen Ebene miteinander verbunden werden, **dadurch gekennzeichnet, dass** der Überbrückungsschalter (6, 7) die jeweilige Leitung (8) kurzschließt, sobald der Strom ausfällt und sie wieder öffnet, , wenn das ausgefallene Netzwerkgerät (2 bis 5) vollständig gebootet ist, wobei die Redundanzfunktion nach einem Multi-Master-Redundanz-Verfahren realisiert wird und das Multi-Master-Redundanz-Verfahren als ein Device-Level-Ring-Verfahren realisiert wird.

2. Verfahren nach Anspruch 1 **dadurch gekennzeichnet, dass** die Verbindung der beiden Ports des ausgefallenen Netzwerkgerätes (2 bis 5) aufgehoben wird, wenn ein anderes als das ausgefallene Netzwerkgeräte (2 bis 5) als Master aktiviert wurde.

## Claims

1. Method for operating a network (1) according to a multi-master redundancy method with a redundancy function, wherein a plurality of network devices (2 to 5) are connected to one another in the network (1) in a ring topology via lines (8) and interchange data, wherein, if one of the network devices (2 to 5) fails, two ports of the failed network device (2 to 5) which belong to one of the lines are connected to one another on the physical level by means of a bridging switch (6, 7), **characterized in that** the bridging switch (6, 7) short-circuits the respective line (8) as soon as the current fails and opens it again when the failed network device (2 to 5) has been completely booted, wherein the redundancy function is implemented according to a multi-master redundancy method and the multi-master redundancy method is implemented as a device-level ring method.

2. Method according to Claim 1, **characterized in that** the connection of the two ports of the failed network device (2 to 5) is cancelled if a network device (2 to 5) other than the failed network device has been activated as the master.

## Revendications

1. Procédé pour faire fonctionner un réseau (1) selon un procédé à redondance à maîtres multiples ayant une fonction de redondance, plusieurs périphériques de réseau (2 à 5) étant reliés entre eux dans le réseau (1) par le biais de lignes (8) dans une topologie en anneau et échangeant des données, dans le cas où l'un des périphériques de réseau (2 à 5) tombe en panne, deux ports du périphérique de réseau (2 à 5) tombé en panne, lesquels appartiennent à l'une des lignes, étant reliés l'un à l'autre au moyen d'un commutateur de pontage (6, 7) sur le plan physique, **caractérisé en ce que** le commutateur de pontage (6, 7) court-circuite la ligne (8) respective dès que le courant est défaillant et l'ouvre de nouveau lorsque le périphérique de réseau (2 à 5) défaillant a entièrement redémarré, la fonction de redondance étant réalisée selon un procédé à redondance à maîtres multiples et le procédé à redondance à maîtres multiples étant réalisé en tant que procédé d'anneau au niveau du périphérique.

2. Procédé selon la revendication 1, **caractérisé en ce que** la liaison des deux ports du périphérique de réseau (2 à 5) défaillant est supprimée lorsqu'un autre que le périphérique de réseau (2 à 5) défaillant a été activé en tant que maître.
